# EUROPÄISCHE PATENTSCHRIFT

(11) **EP 2 605 967 B1**
(45) Veröffentlichungstag und Bekanntmachung des Hinweises auf die Patenterteilung: **10.02.2016**
(21) Anmeldenummer: 11748549.0
(22) Anmeldetag: 09.08.2011
(51) Int. Cl.: H01H 85/36, A62C 37/10, B64G 1/22

(54) **VORRICHTUNG ZUM ELEKTRISCHEN KONTAKTIEREN UND MECHANISCHEN HALTEN DER ENDEN EINES ABREISSDRAHTES BEI EINER FREIGABEVORRICHTUNG FÜR VORGESPANNTE RÜCKHALTEELEMENTE IN RAUMFAHRZEUGEN**
DEVICE FOR ELECTRICALLY CONTACTING AND MECHANICALLY HOLDING THE ENDS OF A PULL-OFF WIRE IN A RELEASE DEVICE FOR PRESTRESSED RETAINING ELEMENTS IN SPACECRAFT
DISPOSITIF POUR LA MISE EN CONTACT ÉLECTRIQUE ET LE MAINTIEN MÉCANIQUE DES EXTRÉMITÉS D'UN FIL DE RUPTURE DANS LE CAS D'UN DISPOSITIF DE LIBÉRATION POUR DES ÉLÉMENTS DE RETENUE PRÉTENDUS DANS DES VÉHICULES SPATIAUX

(30) Priorität: 16.08.2010 AT 13732010
(43) Veröffentlichungstag der Anmeldung: 26.06.2013
(73) Patentinhaber: RUAG Space GmbH, 1120 Wien (AT)
(72) Erfinder: NEUGEBAUER, Christian, A-1230 Wien (AT); GÜNTHER, Florian, A-1050 Wien (AT)
(74) Vertreter: Keschmann, Marc
(86) Internationale Anmeldenummer: PCT/AT2011/000336
(87) Internationale Veröffentlichungsnummer: WO 2012/021910

(56) Entgegenhaltungen:
- EP-B1- 1 426 291
- FR-A1- 2 938 825
- US-A- 5 253 820
- US-A- 5 621 373

## Beschreibung

Die Erfindung betrifft eine Vorrichtung zum elektrischen Kontaktieren und mechanischen Halten der Enden eines Abreißdrahtes bei einer Freigabevorrichtung für vorgespannte Rückhalteelemente in Raumfahrzeugen.

Die Erfindung betrifft weiters eine Vorrichtung zum Festhalten und kommandierten Freigeben eines freizugebenden Elements eines Raumfahrzeuges, umfassend einen wenigstens zwei Spulensegmente aufweisenden geteilten Spulenkörper, bei dem wenigstens ein Spulensegment von einer ersten Position in eine zweite Position verlagerbar ist, wobei die Spulensegmente in der ersten Position ein Ende des freizugebenden Elements in einer Halteposition halten und in der zweiten Position das Ende des freizugebenden Elements aus seiner Halteposition freigeben, ein Rückhalteelement zum Halten der Spulensegmente in der ersten Position und eine Freigabevorrichtung zum Freigeben des Rückhalteelements, die einen Abreißdraht umfasst, dessen Enden mit einer Spannungsquelle verbindbar sind, und eine Vorrichtung zum elektrischen Kontaktieren und mechanischen Halten der Enden des Abreißdrahtes.

Um in und an Raumfahrzeugen angebrachte freizugebende Elemente kommandiert freizugeben, ist häufig die Umwandlung eines elektrischen Signals in eine mechanische Komponente notwendig. Für diese Aufgabe wird unter anderem ein Abreißdraht verwendet. Die mechanische Festigkeit des Abreißdrahtes wird durch Erwärmen desselben mittels eines Stromsignals, welches durch den Abreißdraht fließt, kommandiert reduziert, bis dieser reißt. Solche freizugebenden Elemente müssen während des Startvorganges platzsparend untergebracht sein, um im begrenzten Raum einer Trägerrakete Platz zu finden und sie müssen erhebliche mechanische Lasten während dieses Startvorgangs ertragen. Aus diesem Grund werden solche Elemente im zusammengefalteten Zustand ans Raumfahrzeug angebracht und es wird ein steifer Lastpfad vorgesehen, der die erheblichen Inertialkräfte während des Raketenstarts überträgt. Die Öffnung dieser zusammengefalteten Elemente oder das Auftrennen des steifen Lastpfades wird durch eine Freigabevorrichtung bewirkt, die kommandiert ein Rückhalteelement freigibt, mit dem das im Raumfahrzeug angebrachte Element vorgespannt ist. Für diese Aufgabe haben sich unter anderem Elemente etabliert, welche das Prinzip des geteilten Spulenkörpers ("Split Spool" - Prinzip) ausnützen. Dabei halten die Spulensegmente des geteilten Spulenkörpers das freizugebende Element zurück. Die Spulenkörper werden wiederum von einem um sie herumgewickelten Rückhalteelement radial zurückgehalten, welches mit Hilfe des eingangs erwähnten Abreißdrahtes im vorgespannten Zustand gehalten und kommandiert freigegeben werden kann.

Zum elektrischen Kontaktieren und mechanischen Halten der Enden eines Abreißdrahtes ist es beispielsweise aus der US 5,621,373 bekannt geworden, die beiden Enden des Abreißdrahtes in je ein Rohr einzuführen, dessen Innendurchmesser etwas größer ist als der Außendurchmesser des Abreißdrahtes. Durch Biegen der Rohre und Crimpen wird eine elektrische und mechanische Anbindung zwischen den Rohren und den Enden des Abreißdrahtes erreicht. Die Rohre werden mit einem isolierenden Körper mechanisch festgehalten und mit elektrischen Leitern kontaktiert.

Diese Druckschrift wird als nächstliegender Stand der Technik angesehen und offenbart alle Merkmale des Oberbegriffes des Anspruchs 1.

Beim Gegenstand der Patentschrift EP 1 426 291 B1 ist ein Drahtbrückenstück vorgesehen. Ein integriertes einstückiges Element weist eine definierte Sollbruchstelle mit kleinem Querschnitt auf. Jene Teile des Elementes, welche einen größeren Querschnitt aufweisen, werden mit isolierenden Teilen mechanisch festgehalten und mit elektrischen Leitern kontaktiert.

Eine andere Möglichkeit der elektrischen Kontaktierung und des mechanischen Haltens der Drahtenden eines Abreißdrahtes ist das sogenannte "Wire Wrapping". Beim Wire Wrapping wird je ein Drahtende mehrmals um einen scharfkantigen Körper gewickelt, wodurch vorrangig eine elektrische Anbindung erreicht wird. Die mechanische Festigkeit der Verbindung ist gering.

Beim Löten wird je ein Drahtende auf einen metallischen Körper aufgelötet, wodurch vorrangig eine elektrische Kontaktierung zwischen dem Drahtende und dem metallischen Körper erreicht wird. Die mechanische Festigkeit der Verbindung ist gering.

Die vorliegende Erfindung zielt nun darauf ab, eine Anbindungen von Abreißdrähten für das kommandierte Freigeben von Elementen in Raumfahrtanwendungen zu schaffen, die den folgende Anforderungen genügt. Es soll ein zuverlässiges mechanisches Halten des Abreißdrahtes bei gleichzeitig möglichst geringer mechanischen Schwächung des Abreißdrahtes durch die mechanische Anbindung (Kerbwirkung, thermische Einflüsse von etwaigen Fügeprozessen) über mehrere Jahre sichergestellt sein. Weiters soll auch ein zuverlässiges elektrisches Kontaktieren des Abreißdrahtes über mehrere Jahre gewährleistet sein. Es sollen ausschließlich für die Raumfahrt zugelassene Materialien zum Einsatz gelangen. Die Betätigung des Abreißdrahtes soll sowohl in Luft als auch in Hoch-Vakuum möglich sein. Weiters ist eine geringe Masse erstrebenswert. Die Betätigung des Abreißdrahtes soll über einen großen Temperaturbereich möglich und frei von Fehlauslösungen sein. Eine hohe Steifigkeit der mechanischen Anbindung ist erstrebenswert. Die bei der Herstellung und Montage verwendeten Prozesse müssen beherrscht und prüfbar sein. Schließlich soll für die Anbindung ein analytischer Nachweis der mechanischen und elektrischen Sicherheiten mit etablierten Berechnungsmethoden möglich sein.

Zur Lösung dieser Aufgabe ist die Vorrichtung der eingangs genannten Art erfindungsgemäß im Wesentlichen derart weitergebildet, dass die Vorrichtung einen Scheibenstoß aufweist, bei dem wenigstens zwei übereinander liegende Scheiben aus elektrisch leitfähigem Material vorgesehen sind, zwischen denen ein Ende des Abreißdrahtes klemmbar ist und von denen wenigstens eine Scheibe mit der Spannungsquelle elektrisch verbindbar ist. Zur Anbindung des Abreißdrahtes wird somit ein "Stack" aus mehreren elektrisch leitenden und bevorzugt auch isolierenden Scheiben zusammengespannt, wobei sich die Enden des Abreißdrahtes zwischen zwei leitenden Scheiben befinden, sodass gleichzeitig eine sichere elektrische Kontaktierung und eine stabile mechanische Befestigung erreicht wird. Dabei ist es von Vorteil, wenn, wie dies einer bevorzugten Weiterbildung entspricht, die elektrisch leitenden Scheiben, zwischen welchen der Abreißdraht klemmbar ist, eine geringere mechanische Festigkeit aufweisen als der Abreißdraht. Insbesondere kann das Material der elektrisch leitenden Scheiben plastisch verformbar sein, beispielsweise Kupfer oder Silber sein.

Durch die Verwendung eines Materials mit hoher mechanischer Festigkeit für den Abreißdraht und eines Materials deutlich niedrigerer mechanischer Festigkeit für die leitenden Scheiben wird beim Zusammenspannen des Scheibenstoßes und beim dadurch bewirkten Festklemmen des Drahtendes eine plastische Verformung der leitenden Scheiben bei gleichzeitiger Unversehrtheit des Abreißdrahtes erreicht. Dadurch ergeben sich folgende Vorteile. Die elektrische Kontaktierung ist aufgrund einer großen Kontaktfläche zuverlässig und weist einen geringen Übergangswiderstand auf. Die mechanische Schwächung des Abreißdrahtes auf Grund einer allfälligen Kerbwirkung ist minimal, da sich durch die plastische Verformung der leitenden Scheiben, deren bevorzugt abgerundete Kanten und die hohe mechanische Festigkeit des Abreißdrahtes ein besonders sanfter Kraftfluss ausprägt.

Eine besonders günstige Materialpaarung ist dann gegeben, wenn die leitenden Scheiben aus Kupfer oder Silber bestehen und der Abreißdraht aus Edelstahl besteht.

Mit Hilfe des erfindungsgemäßen Scheibenstoßes können natürlich mehrere, insbesondere zwei Drahtenden gleichzeitig geklemmt werden. Eine bevorzugte Weiterbildung sieht in diesem Zusammenhang vor, dass zwei elektrisch leitende Scheiben, zwischen denen das eine Ende des Abreißdrahtes klemmbar ist, und zwei weitere elektrisch leitende Scheiben, zwischen denen das andere Ende des Abreißdrahtes klemmbar ist, durch wenigstens eine elektrische isolierende Scheibe voneinander elektrisch isoliert sind.

Zum Zusammenspannen des Scheibenstoßes ist die Ausbildung bevorzugt derart weitergebildet, dass die Scheiben des Scheibenstoßes mit Hilfe eines Spannelements, insbesondere einer sich durch eine zentrale Ausnehmung der Scheiben erstreckenden Schraube, zusammengespannt sind, wobei zur elektrischen Isolierung des Spannelements, dieses bevorzugt von einer elektrisch isolierenden Hülse umgeben ist.

Durch das Klemmen beider Enden des Abreißdrahtes mit einer einzigen Schraube wird die Anzahl der Teile reduziert und die Herstellung und Montage rationalisiert. Es können naturgemäß aber auch mehrere, insbesondere auch vier oder mehr Drahtenden in einem Scheibenstoß geklemmt werden. Ein weiterer Vorteil ist, dass sämtliche Einzelteile des Scheibenstoßes mit etablierten Standard-Prozessen wirtschaftlich gefertigt werden können. Sowohl die mechanische als auch die elektrische Anbindung werden mit einem einzigen Arbeitsschritt (dem Anziehen der Schraube) erreicht. Nach erfolgter Auslösung, dem Abreißen des Abreißdrahtes, muss lediglich der Abreißdraht ausgetauscht werden. Die anderen Teile können großteils wiederverwendet werden. Als weiterer Vorteil ist zu nennen, dass der Scheibenstoß durch die angezogene Schraube eine hohe mechanische Steifigkeit besitzt.

Teile von Raumfahrzeugen müssen derart ausgelegt sein, dass ihre Funktion auch bei extremen Temperaturbedingungen und -schwankungen gewährleistet ist. Beispielsweise herrschen beim Start von Raumfahrzeugen auf der Erde völlig andere Temperaturen als dies im Weltraum der Fall ist, wo sowohl sehr hohe als auch sehr niedrige Temperaturen zu beobachten sind. Auf Grund solcher Temperaturunterschiede kommt es naturgemäß zu entsprechenden Wärmeausdehnungen der Bauteile, welche jedoch so kompensiert werden müssen, dass die Funktionalität der jeweiligen Bauteile nicht beeinträchtigt wird. Um zu verhindern, dass es auf Grund von temperaturbedingten Ausdehnungen oder Schrumpfungen zu einer Veränderung der Klemmkraft im Scheibenstoß kommt, sieht eine bevorzugte Weiterbildung der Erfindung vor, dass der mit der Dicke der jeweiligen Scheiben gewichtete arithmetische Mittelwert der linearen Wärmedehnungskoeffizienten aller Scheiben dem linearen Wärmeausdehnungskoeffizienten des Spannelements multipliziert mit der geklemmten Länge entspricht. Durch gezieltes Anpassen der Dicke der einzelnen Scheiben unter Berücksichtigung des linearen Wärmeausdehnungskoeffizienten der jeweiligen Werkstoffe gelingt es dabei, den materialmäßig eigentlich inhomogenen Scheibenstoß quasi-iso-expansiv zu gestalten, d.h. es tritt bei Temperaturänderung keine relative Dehnung zwischen der Schraube und den geklemmten Scheiben auf.

Die Erfindung wird nachfolgend anhand eines in der Zeichnung schematisch dargestellten Ausführungsbeispiels näher erläutert. In dieser zeigen
- Fig.1: eine perspektivische Darstellung einer Vorrichtung zum Festhalten und kommandierten Freigeben eines freizugebenden Elements eines Raumfahrzeuges,
- Fig.2: eine Querschnittsansicht des Spulenkörpers,
- Fig.3: eine perspektivische Darstellung des Endes des freizugebenden Elements,
- Fig.4: eine perspektivische Darstellung eines Spulensegments,
- Fig.5: einen Querschnitt entlang der Linie V-V der Fig.2,
- Fig.6: einen Querschnitt entlang der Linie VI-VI der Fig.2,
- Fig.7: eine Darstellung des Rückhaltebandes auf dem Spulenkörper in vorgespanntem Zustand,
- Fig.8: eine Darstellung des Rückhaltebandes in entspanntem Zustand,
- Fig.9a/9b: einen Vergleich zwischen einem Rückhalteband mit rechteckigem und mit rundem Querschnitt,
- Fig.10: eine perspektivische Darstellung der Freigabevorrichtung,
- Fig.11: eine Ansicht der Freigabevorrichtung von der Seite,
- Fig.12: einen Querschnitt der Freigabevorrichtung nach der Linie XII-XII der Fig.11,
- Fig.13a-13c: eine Darstellung der zurückgehaltenen und zweier freigegebener Zustände der Freigabevorrichtung,
- Fig.14: eine perspektivische Darstellung der Klemmvorrichtung für den Abreißdraht,
- Fig.15: eine Draufsicht der Klemmvorrichtung und
- Fig.16: einen Querschnitt der Klemmvorrichtung nach der Linie XVI-XVI der Fig.15.

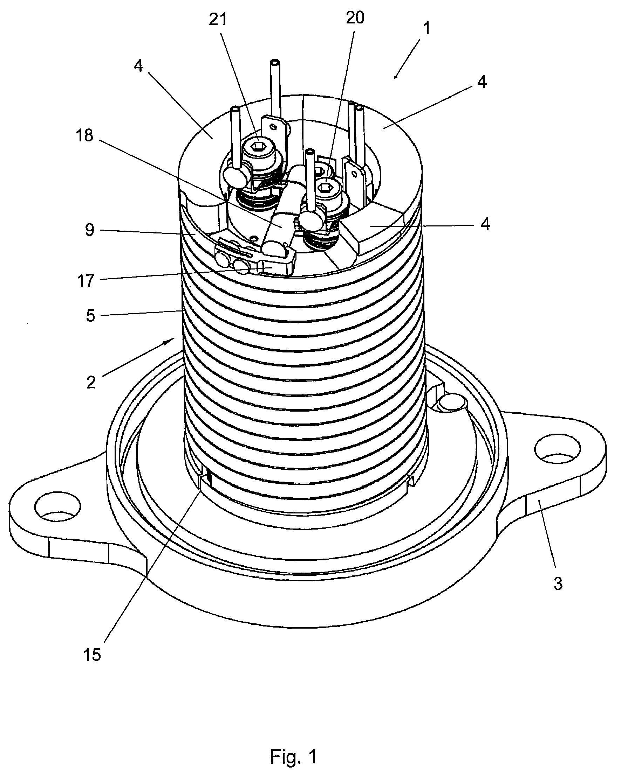

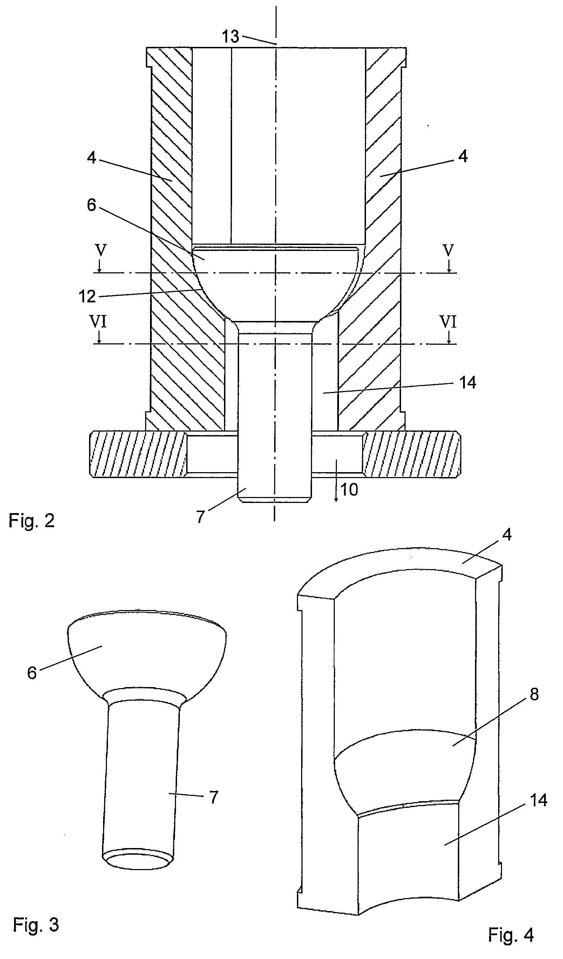

In Fig.1 ist eine Vorrichtung 1 zum Festhalten und kommandierten Freigeben eines freizugebenden Elements eines Raumfahrzeuges dargestellt. Es ist ein geteilter Spulenkörper 2 vorgesehen, der auf einem Befestigungsflansch 3 angebracht ist und aus drei Spulensegmenten 4 besteht, die von einem vorgespannten Rückhalteband 5 in der in Fig.1 dargestellten zusammengerückten Position gehalten werden. Wie dies aus der Querschnittsansicht gemäß Fig.2 erkennbar ist, ist der geteilte Spulenkörper 2 hohl ausgebildet und hält in seinem Inneren das Ende 6 eines freizugebenden Elements 7 fest. Das Ende 6 des freizugebenden Elements 7 ist zu diesem Zweck als Halbkugel ausgebildet und weist dementsprechend eine sphärische Oberfläche auf (Fig.3). Das Ende 6 liegt mit seiner sphärischen Oberfläche in Ausnehmungen 8 auf, wobei in jedem Spulensegment 4 eine Ausnehmung 8 ausgebildet ist, wobei die Ausnehmungen 8 jeweils eine konkave, sphärische Gegenfläche aufweisen (Fig.4). Das freizugebende Element 7 wird mit Hilfe einer nicht dargestellten Schraubenmutter in axialer Richtung gegen die Gegenflächen der Ausnehmungen 8 gespannt, sodass das freizugebende Element 7 durch den Spulenkörper 2 festgehalten wird, solange das vorgespannte Rückhalteband 5 die Spulensegmente 4 in der in Fig.2 dargestellten Position zusammenhält. Wenn das gespannte Ende 9 des Rückhaltebandes 5 freigegeben wird und das elastische Rückhalteband 5 dadurch auf einen größeren Durchmesser zurückfedert, werden die Spulensegmente 4 auf Grund der vom freizugebenden Element 7 am Kontakt der sphärischen Fläche des Endes 6 mit den sphärischen Gegenflächen der Ausnehmungen 8 auf die Spulensegmente 4 übertragenen Kräfte in radialer Richtung auseinandergedrückt, wodurch das freizugebenden Element in Richtung des Pfeils 10 freigegeben wird.

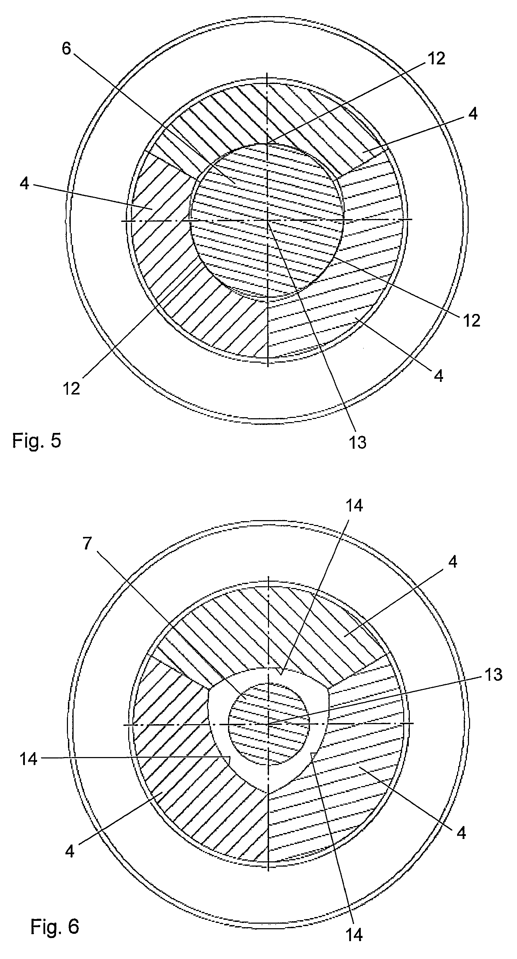

Wie dies insbesondere in der Schnittansicht gemäß Fig.5 ersichtlich ist, liegt das sphärisch ausgebildetes Ende 6 auf den Gegenflächen der Ausnehmungen 8 der drei Spulensegmente 4 unter Ausbildung einer Punktberührung auf, wobei der jeweilige Kontaktpunkt 12 in einer Ebene liegt, welche durch die Winkelhalbierenden der jeweiligen Spulensegmente 4 gegeben ist. Die sphärischen Gegenflächen der Ausnehmungen 8 sind dabei in Bezug auf die Achse 13 des Spulenkörpers 2 exzentrisch angeordnet, wobei der jeweilige Kugelmittelpunkt in einer Ebene liegt, welche durch die Winkelhalbierenden der Spulensegmente gegeben ist, und die Mittelpunkte im nicht freigegebenen Zustand des Spulenkörpers 2 nicht kongruent sind. Auch die zylindrischen Ausnehmungen 14 sind in Bezug auf die Achse 13 des Spulenkörpers exzentrisch angeordnet (Fig.6). Der Durchmesser der kugelförmigen Ausnehmung 8 und der zylindrischen Ausnehmungen 14 ist größer als jener der Kugel auf dem freizugebenden Element 7. Aufgrund der Exzentrizität und der verschiedenen Durchmesser ergibt sich eine Kontaktgeometrie, welche eine hohe Konformität - analog zu einem Kugellager - aufweist.

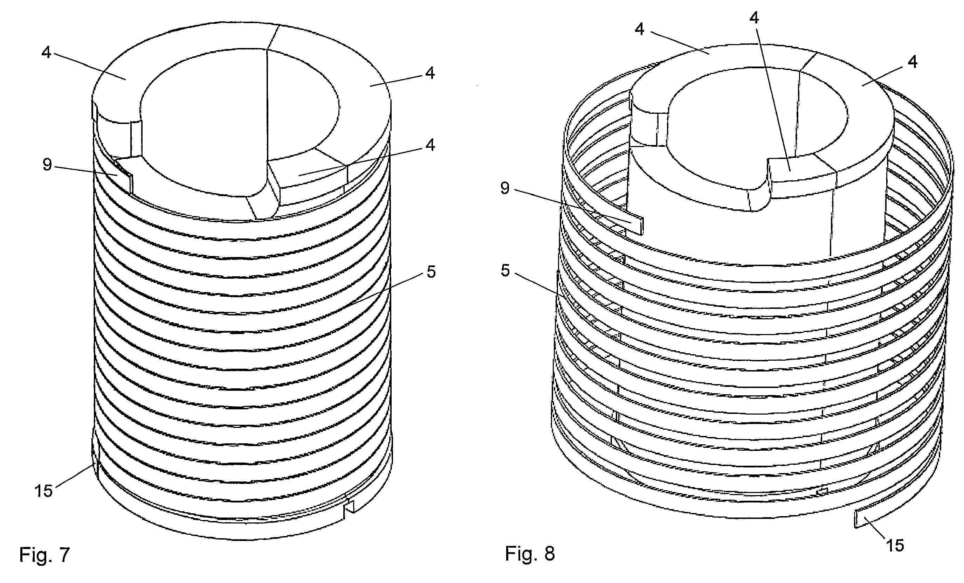

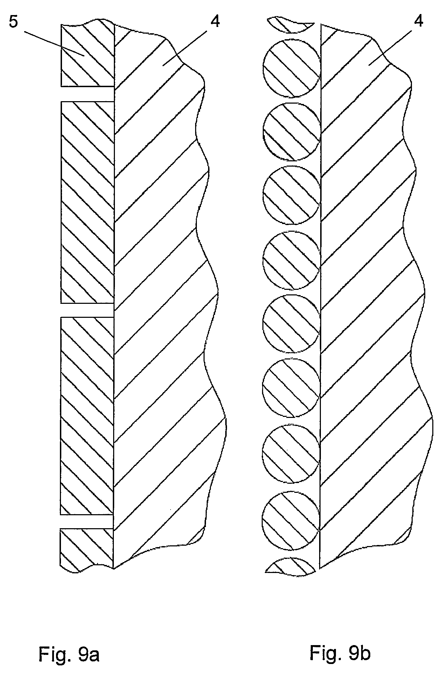

In den Fig.7, 8 und 9a/9b ist der Spulenkörper mit dem schraubenlinienförmig verlaufenden Rückhalteband 5 dargestellt. Das Rückhalteband 5 weist einen rechteckigen Querschnitt (Fig.9a) auf und hat im spannungsfreien Zustand (Fig.8) einen größeren Durchmesser als der Außendurchmesser der Spulensegmente 4. Das Rückhalteband 5 wird schraubenförmig und nicht-überlappend um die Spulensegmente 4 gewickelt und ist am unteren Ende 15 mit den Spulensegmenten 4 trennbar verbunden und am oberen Ende 9 von einer Freigabevorrichtung 16 gehalten, welche es ermöglicht, das obere Ende 9 des Rückhaltebandes 5 kommandiert freizugeben. Aus einem Vergleich der Fig.9a und 9b ergibt sich, dass bei einem Rechteckquerschnitt des Rückhaltebandes 5 im Vergleich zu einem kreisrunden Querschnitt ein wesentlich größerer Querschnitt zur Aufnahme der Zugkräfte zur Verfügung steht, während die von der Dicke des Bandes 5 bzw. dem Durchmesser des Runddrahtes abhängigen durch die aufgezwungene Verformung hervorgerufenen Biegespannungen im Wesentlichen gleich sind.

In Fig.9a ist ersichtlich, dass die einzelnen Windungen des Rückhaltebandes 5 einen geringen axialen Abstand voneinander haben, damit sichergestellt ist, dass sich die einzelnen Windungen beim Entspannungsvorgang des Rückhaltebandes 5 nicht gegenseitig behindern. Aber auch bei einer Ausführung, bei welcher sich die Windungen berühren, ist ein zufrieden stellendes Ergebnis zu erwarten.

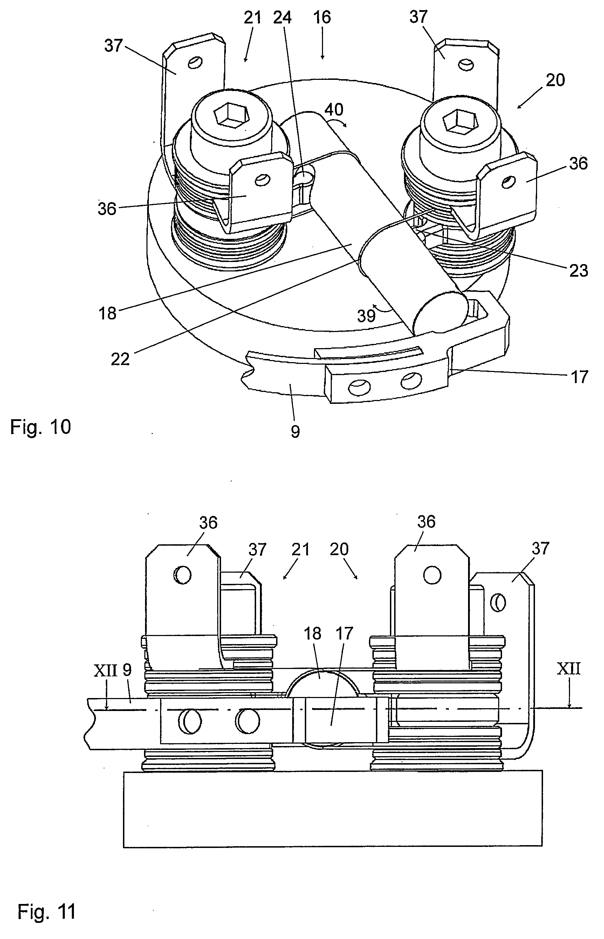

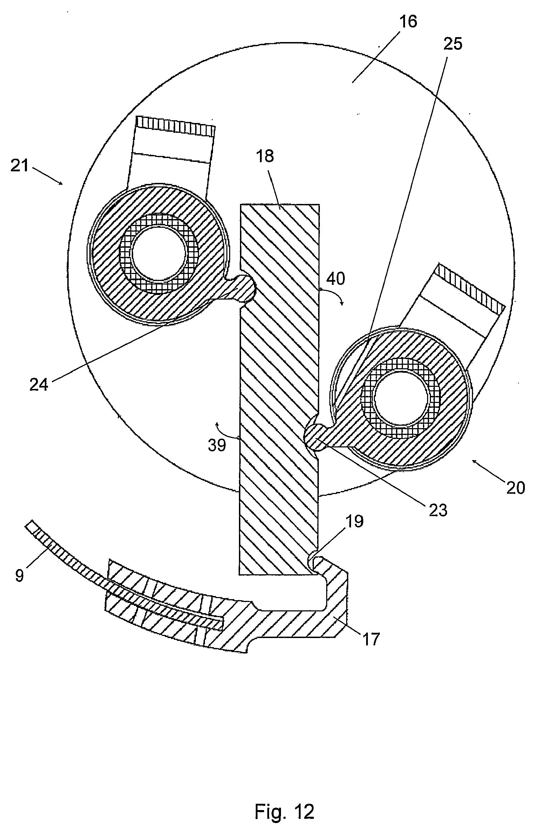

Die Fig.10 bis 13 zeigen die Freigabevorrichtung 16 zum kommandierten Freigeben des Endes 9 des Rückhaltebandes 5. Das Ende 9 des Rückhaltebandes 5 ist mit einem Haken 17 verbunden, welcher an einem Ende des Hebels 18 angreift und dort in eine Kerbe 19 eingreift. Der Hebel 18 wird an seinem anderen Ende mit Hilfe eines ersten Halteelements 20 und eines zweiten Halteelements 21 zurückgehalten. Die Halteelemente 20 und 21 weisen jeweils einen Abreißdraht 22 auf, der den Hebel 18 umfasst, ohne dabei in Nuten oder ähnlichem zu liegen. Zum mechanischen Halten und elektrischen Kontaktieren der Enden der Abreißdrähte 22 weist das Halteelement 20 bzw. 21 jeweils einen Scheibenstoß 11 auf, der weiter unten näher beschreiben ist. Die Abreißdrähte 22 können kommandiert geöffnet werden, indem ein elektrischer Strom durch sie geleitet wird, wodurch sich der Abreißdraht 22 erwärmt und seine mechanische Festigkeit sinkt bis er reißt. Dem Abreißdraht 22 ist beim ersten Halteelement 20 ein erstes Widerlager 23 bzw. eine Nase und beim zweiten Halteelement 21 ein zweites Widerlager 24 bzw. eine Nase zugeordnet, die eine exzessive Bewegung des Hebels 18 während des Angriffs von Inertialkräften, wie sie beispielsweise beim Start einer Trägerrakete auftreten, verhindern. Die Nuten im Hebel 18, in welchen die Nasen 23 und 24 angreifen, sind derart gestaltet, dass eine Drehbewegung des Hebels 18 ohne gleitende Relativbewegung möglich ist (Wälzkontakt) und der noch intakte Abreißdraht 22 die Drehbewegung nicht behindert, da er bei einer Verdrehung des Hebels 18 nicht gespannt, sondern entspannt wird.

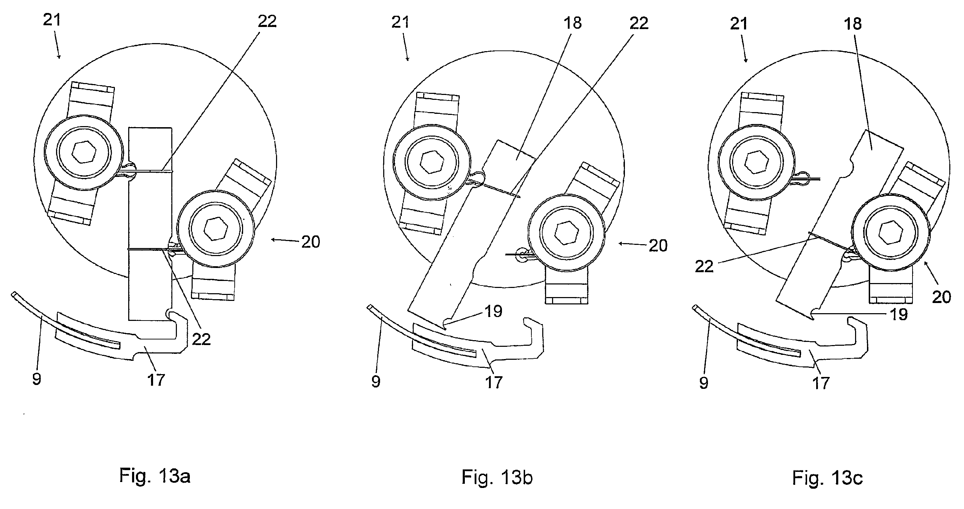

Der Haken 17 zieht den Hebel in der Zeichnung (Fig.10) nach links, während das erste Halteelement 20 auf den Hebel 18 eine nach rechts gerichtete und das zweite Halteelement 21 eine nach links gerichtete Kraft ausübt. Die Kraftverhältnisse sind ausgeprägt nicht-symmetrisch, sowohl dem Betrage der Einzelkräfte als auch deren Richtung nach. Bei einem Abreißen des Abreißdrahtes 22 des ersten Halteelements 20 erfolgt eine Freigabe des Hebels 18 in Richtung des Pfeils 39 und der Hebel 18 dreht um die Nase 24 (Fig.13b). Bei einem Abreißen des Abreißdrahtes 22 des zweiten Halteelements 21 erfolgt eine Freigabe des Hebels 18 in Richtung des Pfeils 40 und der Hebel 18 dreht um die Nase 23 (Fig.13c). Ausnehmungen 25 in den Halteelementen 20 und 21 ermöglichen einen größeren Drehwinkel des Hebels 18. Werden die Abreißdrähte 22 beider Halteelemente 20 und 21 geöffnet, so kann der Hebel 18 ebenfalls drehen. Ein nicht dargestelltes dünnes Band, welches den Hebel 18 lose, d.h. mit signifikantem Spiel und ohne jegliche Vorspannung, mit einem ortsfesten Teil verbindet, verhindert im Falle des Öffnens beider Abreißdrähte 22, dass der Hebel 18 exzessive Bewegungen im Raum ausführt.

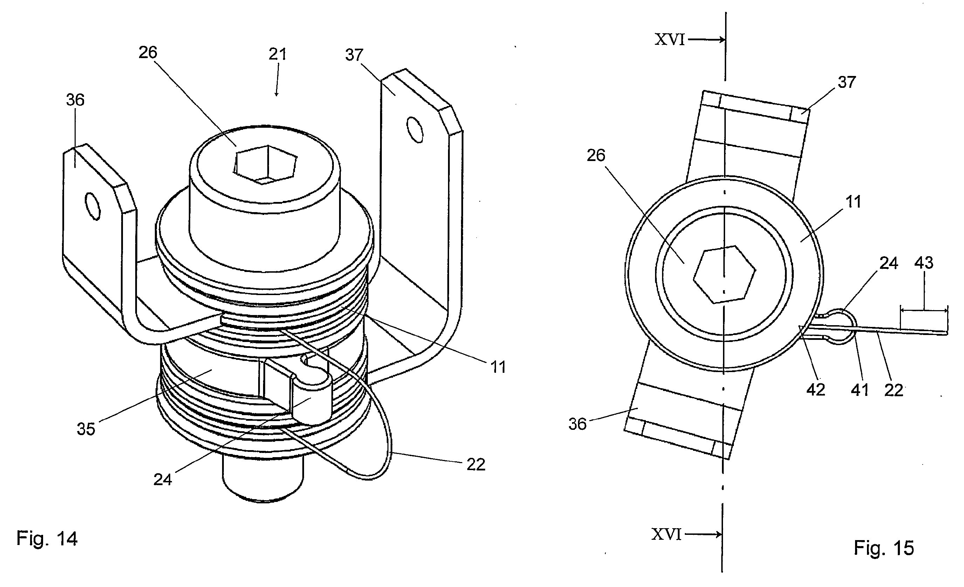

In der Detailansicht gemäß Fig.15 ist am Beispiel des zweiten Halteelements 21 ersichtlich, dass die Kontaktstelle 41 des Widerlagers 24 am Hebel 18, der Befestigungspunkt 42 der Enden des Abreißdrahtes 22 und die Kontaktstelle 43 des Abreißdrahtes 22 am Hebel 18 in der nicht freigegebenen Lage des Halteelements 21 im Wesentlichen in einer Ebene liegen. Dies führt dazu, dass der Abreißdraht bei einer Verschwenkung des Hebels 18 entspannt wird und somit keine Kräfte auf den Hebel 18 ausübt, die zu undefinierten Gleitbewegungen führen würden.

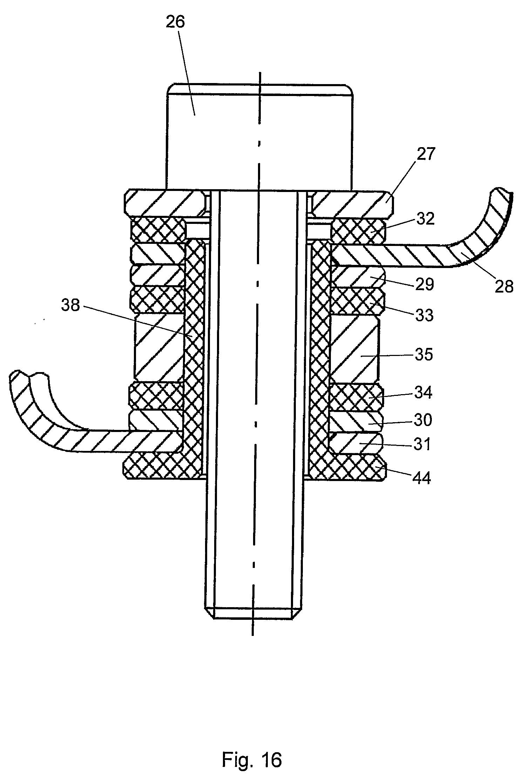

In den Fig. 14 bis 16 ist das Halteelement 21 im Detail dargestellt. Das Halteelement dient dem mechanischen Klemmen und elektrischen Kontaktieren des Abreißdrahtes 22 und ist als Scheibenstoß 11 ausgebildet, der von der Schraube 26 zusammengespannt wird. Mit der Schraube 26 wird über eine Scheibe 27 jedes Ende des Abreißdrahtes 22 zwischen leitenden Scheiben 28 und 29 bzw. 30 und 31 geklemmt, wobei mehrere mitgeklemmte Scheiben 32, 33 und 34 und eine mitgeklemmte Hülse 38 aus nichtleitendem Material die elektrische Isolierung sicherstellen und eine zwischen den isolierenden Scheiben 33 und 34 geklemmte Scheibe 35 die Nase 24 für die Abstützung des Hebels 18 aufweist.

Der Abreißdraht 22 besitzt eine deutlich höhere mechanische Festigkeit als die leitenden Scheiben 28 und 29 bzw. 30 und 31, deren Kanten abgerundet sind. Das eine Ende des Abreißdrahtes 22 ist zwischen den leitenden Scheiben 28 und 29 geklemmt, wobei die eine leitende Scheibe 28 so ausgeführt ist, dass sie gleichzeitig ein Interface 36 für eine elektrische Leitung aufweist. Da die leitenden Scheiben eine deutlich geringere mechanische Festigkeit aufweisen als der Abreißdraht 22, verformen sich diese unter der axialen Klemmkraft, die durch das Anziehen der Schraube 26 hervorgerufen wird. Das andere Ende des Abreißdrahtes 22 ist zwischen den leitenden Scheiben 30 und 31 geklemmt, wobei die leitende Scheibe 30 so ausgeführt ist, dass sie gleichzeitig ein Interface 37 für eine elektrische Leitung aufweist. Die Scheiben 32, 33 und 34 aus nichtleitendem Material isolieren die elektrisch leitenden Scheiben voneinander, während die Hülse 38 aus nicht leitendem Material die Schraube 26 elektrisch isoliert. Die Hülse 38 weist einen den Scheibenstoß abschließenden Rand 44 auf. Die Scheibe 36 weist eine Nase 24 auf, welches das Widerlager für den mit dem Abreißdraht 22 gehaltenen Hebel (Fig.10) bildet.

Wird ein elektrischer Strom über die leitenden Scheiben 28 und 31 durch den Abreißdraht 22 geleitet, so beginnt sich dieser zu erwärmen. Dadurch sinkt seine mechanische Festigkeit bis er versagt. Nach einer Auslösung muss der Abreißdraht 22 ausgetauscht werden, um den Scheibenstoß wiederverwenden zu können. Durch ein Anpassen der Dicke aller geklemmten Scheiben unter Berücksichtigung ihres jeweiligen linearen Wärmeausdehnungskoeffizienten wird ein mittlerer linearer Ausdehnungskoeffizient der geklemmten Teile erreicht, welcher jenem der Schraube 26 entspricht. Dadurch werden relative Dehnungen bei Temperaturänderung vermieden.

## Patentansprüche

1. Vorrichtung zum elektrischen Kontaktieren und mechanischen Halten der Enden eines Abreißdrahtes (22) bei einer Freigabevorrichtung (16) für vorgespannte Rückhalteelemente (5) in Raumfahrzeugen, **dadurch gekennzeichnet, dass** die Vorrichtung einen Scheibenstoß (11) aufweist, bei dem wenigstens zwei übereinander liegende Scheiben (28,29 bzw. 30,31) vorgesehen sind, zwischen denen ein Ende des Abreißdrahtes (22) klemmbar ist und von denen wenigstens eine Scheibe (28,30) aus elektrisch leitfähigem Material besteht und mit einer Spannungsquelle elektrisch verbindbar ist.

2. Vorrichtung nach Anspruch 1, **dadurch gekennzeichnet, dass** das Material der elektrisch leitenden Scheiben (28,29,30,31) plastisch verformbar ist.

3. Vorrichtung nach Anspruch 1 oder 2, **dadurch gekennzeichnet, dass** die elektrisch leitenden Scheiben (28,29,30,31), zwischen welchen der Abreißdraht (22) klemmbar ist, eine geringere mechanische Festigkeit aufweisen als der Abreißdraht (22).

4. Vorrichtung nach Anspruch 1, 2 oder 3, **dadurch gekennzeichnet, dass** die elektrisch leitenden Scheiben (28,29,30,31) aus Kupfer oder Silber bestehen.

5. Vorrichtung nach einem der Ansprüche 1 bis 4, **dadurch gekennzeichnet, dass** der Abreißdraht (22) aus Edelstahl besteht.

6. Vorrichtung nach einem der Ansprüche 1 bis 5, **dadurch gekennzeichnet, dass** zwei elektrisch leitende Scheiben (28,29), zwischen denen das eine Ende des Abreißdrahtes (22) klemmbar ist, und zwei weitere elektrisch leitende Scheiben (30,31), zwischen denen das andere Ende des Abreißdrahtes (22) klemmbar ist, durch wenigstens eine elektrische isolierende Scheibe (33,34) voneinander elektrisch isoliert sind.

7. Vorrichtung nach einem der Ansprüche 1 bis 6, **dadurch gekennzeichnet, dass** die Scheiben des Scheibenstoßes mit Hilfe eines Spannelements, insbesondere einer sich durch eine zentrale Ausnehmung der Scheiben erstreckenden Schraube (26), zusammengespannt sind.

8. Vorrichtung nach Anspruch 7, **dadurch gekennzeichnet, dass** das Spannelement von einer elektrisch isolierenden Hülse (38) umgeben ist.

9. Vorrichtung nach einem der Ansprüche 1 bis 8, **dadurch gekennzeichnet, dass** der Rand der elektrisch leitenden Scheiben (28,29,30,31) abgerundet ausgebildet ist.

10. Vorrichtung nach einem der Ansprüche 1 bis 9, **dadurch gekennzeichnet, dass** der mit der Dicke der jeweiligen Scheiben gewichtete arithmetische Mittelwert der linearen Wärmedehnungskoeffizienten aller Scheiben dem linearen Wärmeausdehnungskoeffizienten des Spannelements multipliziert mit der geklemmten Länge entspricht.

11. Vorrichtung (1) zum Festhalten und kommandierten Freigeben eines freizugebenden Elements (7) eines Raumfahrzeuges, umfassend einen wenigstens zwei Spulensegmente (4) aufweisenden geteilten Spulenkörper (2), bei dem wenigstens ein Spulensegment (4) von einer ersten Position in eine zweite Position verlagerbar ist, wobei die Spulensegmente (4) in der ersten Position ein Ende (6) des freizugebenden Elements (7) in einer Halteposition halten und in der zweiten Position das Ende (6) des freizugebenden Elements (7) aus seiner Halteposition freigeben, ein Rückhalteelement (5) zum Halten der Spulensegmente (4) in der ersten Position und eine Freigabevorrichtung (16) zum Freigeben des Rückhalteelements (5), die einen Abreißdraht (22) umfasst, dessen Enden mit einer Spannungsquelle verbindbar sind, und eine Vorrichtung zum elektrischen Kontaktieren und mechanischen Halten der Enden des Abreißdrahtes (22) nach einem der Ansprüche 1 bis 10.

## Claims

1. A device for electrically contracting and mechanically holding the ends of a pull-off wire (22) in a release device (16) for pre-stressed retaining elements (5) in spacecrafts, **characterized in that** the device comprises a disc stack (11) in which at least two superimposed discs (28,29 and 30,31, respectively) are provided, between which one end of the pull-off wire (22) can be clamped and at least one disc (28,30) of which is made of an electrically conductive material and electrically connectable to a voltage source.

2. A device according to claim 1, **characterized in that** the material of the electrically conducting discs (28,29,30,31) is plastically deformable.

3. A device according to claim 1 or 2, **characterized in that** the electrically conducting discs (28,29,30,31) between which the pull-off wire (22) can be clamped have a lower mechanical strength than the pull-off wire (22).

4. A device according to claim 1, 2 or 3, **characterized in that** the electrically conducting discs (28,29,30,31) are made of copper or silver.

5. A device according to any one of claims 1 to 4, **characterized in that** the pull-off wire (22) is made of stainless steel.

6. A device according to any one of claims 1 to 5, **characterized in that** two electrically conducting discs (28,29) between which said one end of the pull-off wire (22) can be clamped and two further electrically conducting discs (30,31) between which the other end of the pull-off wire (22) can be clamped are electrically insulated relative to one another by at least one electrically insulating disc (33,34).

7. A device according to any one of claims 1 to 6, **characterized in that** the discs of the disc stack are braced together with the aid of a bracing member, in particular a screw (26) extending through a central recess of the discs.

8. A device according to claim 7, **characterized in that** the bracing member is surrounded by an electrically insulating sleeve (38).

9. A device according to any one of claims 1 to 8, **characterized in that** the edges of the electrically conducting discs (28,29,30,31) are designed to be rounded.

10. A device according to any one of claims 1 to 9, **characterized in that** the arithmetic mean of the linear thermal expansion coefficient of all discs weighted by the thickness of the respective discs corresponds to the linear thermal expansion coefficient of the bracing member multiplied by the clamped length.

11. A device (1) for holding and command-releasing an element (7) to be released of a spacecraft, comprising a divided coil body (2) including at least two coil segments (4) and in which at least one coil segment (4) is displaceable from a first position into a second position, wherein the coil segments (4), in the first position, hold in a holding position an end (6) of the element (7) to be released and, in the second position, release from said holding position the end (6) of the element (7) to be released, a retaining element (5) for holding the coil segments (4) in the first position, and a release device (16) for releasing the retaining element (5), which release device includes a pull-off wire (22) whose ends are connectable to a voltage source, and a device for electrically contacting and mechanically holding the ends of the pull-off wire (22) according to any one of claims 1 to 10.

## Revendications

1. Dispositif pour la mise en contact électrique et le maintien mécanique des extrémités d'un fil de rupture (22) dans le cas d'un dispositif de libération (16) pour des éléments de retenue prétendus (5) dans des véhicules spatiaux, **caractérisé en ce que** le dispositif comprend une pile de disques (11) pour lequel sont prévus au moins deux disques superposés (28, 29 ou 30, 31) entre lesquels l'extrémité d'un fil de rupture (22) peut être coincée et dont au moins un disque (28, 30) consiste en un matériau électriquement conducteur et est apte à être relié électriquement à une source de tension.

2. Dispositif selon la revendication 1, **caractérisé en ce que** le matériau des disques électriquement conducteurs (28, 29, 30, 31) est plastiquement déformable.

3. Dispositif selon la revendication 1 ou 2, **caractérisé en ce que** les disques électriquement conducteurs (28, 29, 30, 31) entre lesquels le fil de rupture (22) peut être coincée, présentent une résistance mécanique moindre que le fil de rupture (22).

4. Dispositif selon la revendication 1, 2 ou 3, **caractérisé en ce que** les disques électriquement conducteurs (28, 29, 30, 31) sont en cuivre ou en argent.

5. Dispositif selon l'une quelconque des revendications 1 à 4, **caractérisé en ce que** le fil de rupture (22) est en acier inoxydable.

6. Dispositif selon l'une quelconque des revendications 1 à 5, **caractérisé en ce que** deux disques électriquement conducteurs (28, 29) entre lesquels une extrémité du fil de rupture (22) peut être coincée, et deux autres disques électriquement conducteurs (30, 31) entre lesquels l'autre extrémité du fil de rupture (22) peut être coincée, sont électriquement isolés les uns des autres par au moins un disque électriquement isolant (33, 34).

7. Dispositif selon l'une quelconque des revendications 1 à 6, **caractérisé en ce que** les disques de la pile de disques sont serrés à l'aide d'un élément de serrage, notamment d'une vis (26) s'étendant à travers un évidement central des disques.

8. Dispositif selon la revendication 7, **caractérisé en ce que** l'élément de serrage est entouré d'un manchon électriquement isolant (38).

9. Dispositif selon l'une quelconque des revendications 1 à 8, **caractérisé en ce que** le bord des disques électriquement conducteurs (28, 29, 30, 31) présente une forme arrondie.

10. Dispositif selon l'une quelconque des revendications 1 à 9, **caractérisé en ce que** la valeur moyenne des coefficients de dilatation linéaire de tous les disques, pondérée avec l'épaisseur des disques respectifs, correspond au coefficient de dilatation linéaire de l'élément de serrage multiplié par la longueur coincée.

11. Dispositif (1) pour le maintien et la libération commandée d'un élément à libérer (7) d'un véhicule spatial, comprenant un corps de bobine divisé (2) comportant au moins deux segments de bobine (4), sur lequel au moins un segment de bobine (4) est apte à être déplacé d'une première position vers une seconde position, où, dans la première position, les segments de bobine (4) maintiennent une extrémité (6) de l'élément à libérer (7) dans une position de maintien et, dans la seconde position, libèrent l'extrémité (6) de l'élément à libérer (7) de sa position de maintien, un élément de retenue (5) pour maintenir les segments de bobine (4) dans la première position et un dispositif de libération (16) pour libérer l'élément de retenue (5), qui comporte un fil de rupture (22) dont les extrémités sont aptes à être raccordées à une source de tension, et un dispositif pour la mise en contact électrique et le maintien mécanique des extrémités d'un fil de rupture (22) selon l'une quelconque des revendications 1 à 10.
